# EUROPÄISCHE PATENTSCHRIFT

(11) **EP 1 928 767 B1**
(45) Veröffentlichungstag und Bekanntmachung des Hinweises auf die Patenterteilung: **08.07.2009**
(21) Anmeldenummer: 06763013.7
(22) Anmeldetag: 08.08.2006
(51) Int. Cl.: B65G 47/91

(54) **UNTERDRUCKSYSTEM**
VACUUM SYSTEM
SYSTEME A VIDE

(30) Priorität: 28.09.2005 DE 102005047385; 31.03.2006 DE 102006016235; 31.03.2006 DE 102006016236; 24.05.2006 WO PCT/EP2006/004968
(43) Veröffentlichungstag der Anmeldung: 11.06.2008
(73) Patentinhaber: J. Schmalz GmbH, 72293 Glatten (DE)
(72) Erfinder: EISELE, Thomas, 78737 Fluorn-Winzeln (DE); SCHAAF, Walter, 72250 Freudenstadt-Grüntal (DE)
(74) Vertreter: Steimle, Josef
(86) Internationale Anmeldenummer: PCT/EP2006/007818
(87) Internationale Veröffentlichungsnummer: WO 2007/036259

(56) Entgegenhaltungen:
- DE-A1- 3 105 298
- DE-A1- 19 646 890

## Beschreibung

Die Erfindung betrifft ein Unterdrucksystem, insbesondere ein Unterdruckgreifsystem, mit wenigstens einer Unterdruckgreifvorrichtung zum Greifen von Werkstücken und/oder mit einer Unterdruckkomponente.

Unterdrucksysteme werden zum Erzeugen von Unterdruck und zum Handhaben von Gegenständen verwendet. Eine Vorrichtung zum Erzeugen von Unterdruck ist zum Beispiel ein Ejektor, welcher mit Druckluft betrieben wird und an welchen Unterdruckverbraucher angeschlossen sind. Ein derartiger Unterdruckverbraucher ist zum Beispiel ein Sauggreifer, welcher Bestandteil eines Unterdruckgreifsystems ist und mit welchem ein Gegenstand angesaugt wird, sodass er angehoben und an einen anderen Ort transportiert werden kann. Es sind jedoch auch Greifsysteme bekannt, welche zum Festhalten von Werkstücken verwendet werden, sodass die Werkstücke bearbeitet werden können. Die einzelnen Ünterdruckgreifvorrichtungen und die mit diesen zusammenarbeitenden Komponenten unterliegen einem Verschleiß und müssen daraufhin überwacht werden, ob sie Leckagen aufweisen und/oder noch korrekt arbeiten. Eventuell ist es auch erforderlich, dass einzelne Zustandsdaten dieser Bauteile, zum Beispiel ein herrschender Unterdruck, für den weiteren Arbeitsablauf bekannt sein müssen. So kann zum Beispiel ein angesaugtes Werkstück erst dann angehoben werden, wenn der Unterdruck am Sauggreifer einen vorgegebenen Wert erreicht hat.

Hierfür sind Sensoren vorgesehen, die die Zustände erfassen und in Zustandsdaten umwandeln, wobei die Zustandsdaten dann über Kabel an einen Empfänger übermittelt werden. Ferner sind Kabel erforderlich, um die Sensoren mit elektrischer Energie zu versorgen was aber dazu führt, dass der Verkabelungsaufwand immens ist. Es müssen nicht nur die Druckluft- und Unterdruckleitungen verlegt werden, sondern auch die Kabel für die Energieversorgung sowie die Kabel für die Datenübermittlung.

Der Erfindung liegt somit die Aufgabe zugrunde, ein Unterdrucksystem bereit zu stellen, welches einfacher aufgebaut ist.

Diese Aufgabe wird erfindungsgemäß mit einem Unterdrucksystem gelöst, das die Merkmale des Anspruchs 1 aufweist.

Mit der erfindungsgemäßen Vorrichtung bedarf es keiner elektrischer Zuleitungen für die Energieversorgung, da diese mit der Energieerzeugungseinrichtung vor Ort erzeugt wird. Diese elektrische Energie wird nicht einem im Unterdrucksystem enthaltenen originären Energiespeicher entnommen, sondern es wird eine in der Umwelt vorkommende Energieform umgewandelt oder aus einer anderen, auf das Unterdrucksystem einwirkenden Energieform abgeleitet, was z.B. Bewegungsenergie oder Licht sein kann.

Bei einer Weiterbildung der Erfindung weist das Unterdrucksystem ein Element zum Erfassen von Zuständen im Unterdrucksystem, insbesondere im Unterdruckgreifsystem und/oder in einem der Komponenten, und zum Erzeugen von Zustandsdaten auf

Erfindungsgemäß muss die zum Erfassen der Zustände und zum Erzeugen der Zustandsdaten benötigte elektrische Energie nicht mehr über Kabel dem Unterdrucksystem zugeführt werden, da die Unterdruckgreifvorrichtung und/oder wenigstens eine der verwendeten Komponenten mit einer Energieerzeugungseinrichtufig versehen ist, sodass die benötigte elektrische Energie vor Ort erzeugt wird. Diese elektrische Energie wird keinem originären Energiespeicher entnommen sondern aus einer anderen Energieform umgewandelt und insbesondere der Umwelt entnommen.

In bevorzugter Weise ist das elektrische Energie verbrauchende Bauteil ein Sensor, ein Sender, eine optische und/oder akustische Anzeige, ein Ventil, ein anderer Aktor oder ein Datenspeicher. Sollen die Zustandsdaten mittels eines Senders drahtlos gesendet werden, dann wird dieser Sender von der Energieerzeugungseinrichtung ebenfalls mit Energie versorgt. Dies bedeutet, es bedarf keiner Verkabelung zur Übermittlung der Zustandsdaten an einen außerhalb des Unterdrucksystems liegenden Empfänger, da diese Zustandsdaten mittels eines Senders an diesen drahtlos übermittelt werden. Somit entfällt die komplette Verkabelung des Systems, sodass lediglich noch die Luftleitungen verlegt werden müssen. Hierdurch reduziert sich der bauliche Aufwand wesentlich und Reparaturen und Wartungsarbeiten können schneller und einfacher durchgeführt werden. Auch das Gewicht des Systems wird verringert und die Baugröße reduziert.

Bei einer Weiterbildung ist vorgesehen, dass die Unterdruckgreifvorrichtung ein Sauggreifer, ein Unterdruckspannsystem oder eine andere, ein Werkstück mittels Unterdruck direkt oder indirekt festhaltende Vorrichtung ist. Mit Sauggreifern werden Gegenstände angesaugt, sodass sie abgehoben und an einen anderen Ort bewegt werden können. Mit diesen Unterdruckspannsystemen können Bauteile festgehalten werden, sodass sie anschließend bearbeitet werden können. Diese Bauteile können mit der Energieerzeugungseinrichtung bestückt sein, sodass deren Zustandsdaten, zum Beispiel Schaltzyklen, anliegender Unterdruck, Luftströmungsmenge und dergleichen erfasst und diese Zustandsdaten entweder am Bauteil abgespeichert und/oder an einen externen Empfänger übermittelt werden. Zur Speicherung der Daten kann zum Beispiel ein RFID (Radio Frequency Identification Device) verwendet werden, welches an geeigneter Stelle am Sauggreifer oder am Unterdruckspannsystem befestigt ist. Somit geht die Nutzungshistorie des Bauteils nicht verloren und kann jederzeit abgerufen werden.

Bei einer Weiterbildung ist vorgesehen, dass die Komponente ein Ejektor, eine Vakuumpumpe, ein Vakuumgebläse, ein Ventil, ein Datenspeicher, ein Sauggreifer, ein Federstößel, ein Vakuumschalter oder eine Anzeige ist. Das Ventil ist insbesondere ein Elektromagnetventil, ein pneumatisches Ventil oder ein Tastventil. Auch bei diesen Komponenten, wobei die obige Aufzählung lediglich beispielhaft sein soll, ist eine Energieerzeugungseinrichtung vorgesehen, die die Energie für die Sensoren für die Erfassung der einzelnen Zustandsdaten liefert, wobei auch hier die Daten direkt vor Ort an einen Datenspeicher übermittelt und abgespeichert und/oder an externe Empfänger übermittelt werden. Die Energie zur Abspeicherung und zur Übermittlung wird ebenfalls von der Energieerzeugungseinrichtung bereit gestellt. Im übrigen sei darauf hingewiesen, dass auch aufladbare Energiespeicher, z.B. eine Batterie, ein Akkumulator, ein Kondensator oder eine Brennstoffzelle vorhanden sein können, sodass kleine, über die Energieerzeugungseinrichtung erzeugten Energiemengen akkumuliert werden können.

Bei einem bevorzugten Ausführungsbeispiel ist die Energieerzeugungseinrichtung ein piezoelektrisches Element. Es ist aber auch denkbar, dass Thermopaare, Schwingungswandler, Induktionsgeneratoren, Turbinen mit einem Generator oder photovoltaische Zellen verwendet werden. Insbesondere bei der Handhabung von Gegenständen werden die einzelnen Bauteile mechanisch beansprucht, wobei diese mechanischen Bewegungen von den piezoelektrischen Elementen oder Induktionsgeneratoren in elektrische Energie umgewandelt werden können, sodass diese elektrische Energie für die Sensoren und Sender sowie Speicher bereitgestellt werden kann. Dabei ist das piezoelektrische Element bzw. der Induktionsgenerator bevorzugt in oder an einem Abschnitt angeordnet, der mechanisch bewegt wird, z.B. an einem Kolben oder einer Zylinderwand oder an einem Tastventil, welches beim Aufsetzen auf ein Werkstück in den Sauger eingeschoben wird. Der Abschnitt kann zum Beispiel beim Greifen des Werkstücks auch verformt werden. Diese Verformungsenergie bewirkt die Verformung des piezoelektrischen Elements bzw. des Induktionsgenerators, welches bzw. welcher die mechanische in elektrische Energie umwandelt. Die Turbine ist z.B. im Saug- oder Blasluftstrom angeordnet und treibt einen Generator an.

Mit Vorzug ist der Sensor ein Unterdrucksensor, ein Strömungssensor, ein Luftmengensensor, ein Zähler, ein Bewegungssensor, ein Temperatursensor, ein Abstandssensor, ein Anwesenheitssensor oder ein Kraftsensor. Auf diese Weise können die unterschiedlichsten Zustände ermittelt und entsprechende Daten erzeugt werden. So kann zum Beispiel die Verschleißgrenze eines Sauggreifers erkannt werden, bevor dieser ausfällt. Außerdem kann erkannt werden, wenn ein Gegenstand nicht korrekt angesaugt oder gegriffen wurde, wodurch Unfälle vermieden werden können.

Dabei kann der Sender erfindungsgemäß ein Funksender, ein Infrarotsender, ein Ultraschallsender oder ein kabelgebundener Signalgeber sein. Die Daten können verschlüsselt oder unverschlüsselt und zusammen mit bauteilabhängigen Herkunftsmerkmalen kombiniert werden. Auf diese Weise kann jederzeit festgestellt werden, an welchem Ort die Daten zu welcher Zeit erzeugt wurden.

Eine erfindungsgemäße Weiterbildung sieht vor, dass die Unterdruckgreifvorrichtung und/oder die Unterdruckkomponente einen Datenspeicher zum Abspeichern von Zustandsdaten und/oder von Daten der Unterdruckgreifvorrichtung und/oder der Unterdruckkomponente aufweist. Dieser Datenspeicher kann während des Betriebs und/oder in einem Service- oder Reparaturfall ausgelesen werden. Hierdurch ist es möglich, eventuelle Fehlerursachen schneller aufzuspüren.

Eine Weiterbildung sieht vor, dass die Unterdruckgreifvorrichtung und/oder die Unterdruckkomponente mittels der im Bauteil gespeicherten Daten betrieben wird. Diese Daten können vorgegeben sein, sie können aber auch während des vorhergehenden Betriebs erzeugt worden sein und den nachfolgenden Betrieb beeinflussen.

Weitere Vorteile, Merkmale und Einzelheiten der Erfindung ergeben sich aus den Unteransprüchen und der nachfolgenden Beschreibung, in der unter Bezugnahme auf die Zeichnung mehrere besonders bevorzugte Ausführungsbeispiele im Einzelnen beschrieben sind. Dabei können die in der Zeichnung dargestellten sowie in den Ansprüchen und in der Beschreibung erwähnten Merkmale jeweils einzeln für sich oder in beliebiger Kombination erfindungswesentlich sein.

In der Zeichnung zeigen:
- Figur 1: ein Schaubild, das Grundprinzip der Erfindung darstellend;
- Figur 2: ein Prinzipskizze eines Saugers mit batterielosem Funkmodul und einer externen Speichereinheit;
- Figur 3: eine Prinzipskizze von Sauggreifern mit extern angeordneter Speichereinheit;
- Figur 4: ein Verfahrensschema beim Ansaugen und Abheben eines Gegenstands;
- Figur 5: einen Sauggreifer mit integrierter Speichereinheit;
- Figuren 6 und 7: eine Prinzipskizze eines Saugers mit batterielosem Funkmodul und einer internen Speichereinheit;
- Figur 8: eine Prinzipskizze eines Saugers 42 mit Funkmodul und einem Energie-Zwischenspeicher;
- Figur 9: eine Prinzipskizze eines mechanischen Vakuumschalters mit Funkmodul;
- Figur 10: eine Prinzipskizze eines mechanischen Vakuumschalters mit Funkmodul mit Zwischenspeicher;
- Figur 11: eine Prinzipskizze eines elektrischen Vakuumschalters mit Funkmodul;
- Figuren 12 und 13: eine Prinzipskizze eines Ejektors mit in dessen Luftstrom angeordneter Turbine;
- Figur 14: eine Prinzipskizze eines Tastventils mit Induktionsgenerator und Funksender;
- Figur 15: eine Prinzipskizze einer Ventilinsel; und
- Figuren 16 und 17: eine Prinzipskizze eines Federstößels mit Eintauchtiefenüberwachung.

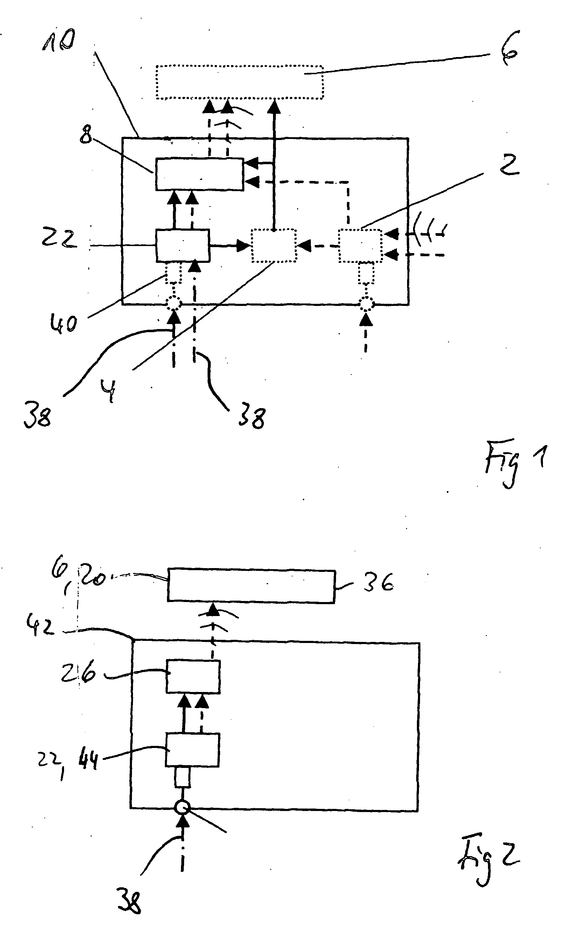

Die Figur 1 zeigt das Grundprinzip der Erfindung, wobei mit dem Bezugszeichen 10 ein Unterdruckgreifsystem bezeichnet ist, in dem sich eine Energieerzeugungseinrichtung 22 befindet, die an ein elektrische Energie verbrauchendes Bauteil 8, z.B. eine Anzeige, ein Sensor, ein Ventil, ein kabelgebundener Signalgeber, ein Sender, ein Datenspeicher, angeschlossen ist. Dieses Bauteil 8 kommuniziert mit einer externen Einheit 6, z.B. zum Lesen, Schreiben, Auswerten oder Anzeigen. Außerdem ist im Unterdruckgreifsystem 10 ein zusätzlicher Energie-Zwischenspeicher 4, z.B. eine Batterie, ein Akkumulator, ein Kondensator, vorgesehen, an den ein zusätzlicher optionaler Signalgeber 2, z.B. ein Schalter, ein Kabel, ein (Funk-) Empfänger, ein Sensor, ein Timer, angeschlossen sein kann. Der durchgezogene Pfeil stellt einen elektrischen Energiefluss dar, wohingegen der strichpunktierte Pfeil einen nichtelektrischen Energiefluss darstellt. Der gestrichelte Pfeil symbolisiert einen Informationsfluss über eine physische Verbindung und der gestrichelte Pfeil mit konzentrischen Bögen symbolisiert einen kabel-, leitungs- oder schlauchlosen Informationsfluss. Mit dem Pfeil 38 wird eine auf das Unterdruckgreifsystem 10 einwirkende Energie symbolisiert. Zur Aktivierung des Verbrauchers 8 kann entweder ein Signal des Signalgebers 2 oder ein elektrischer Impuls der Energieerzeugungseinrichtung 22 verwendet werden. Schließlich ist mit 40 noch eine mechanische Betätigung dargestellt.

Die Figur 2 zeigt eine Prinzipskizze eines Saugers 42 mit batterielosem Funkmodul und einer externen Speichereinheit. Mit 44 ist ein Induktionsgenerator oder ein Piezoelement bezeichnet, der einen Funksender 26 betreibt. Der als Induktionsgenerator oder Piezoelement 44 ausgebildete. Energieerzeuger 22 gibt einen ein Signal darstellenden elektrischen Impuls ab. Die Einheit 6 ist ein externer Datenspeicher 20.

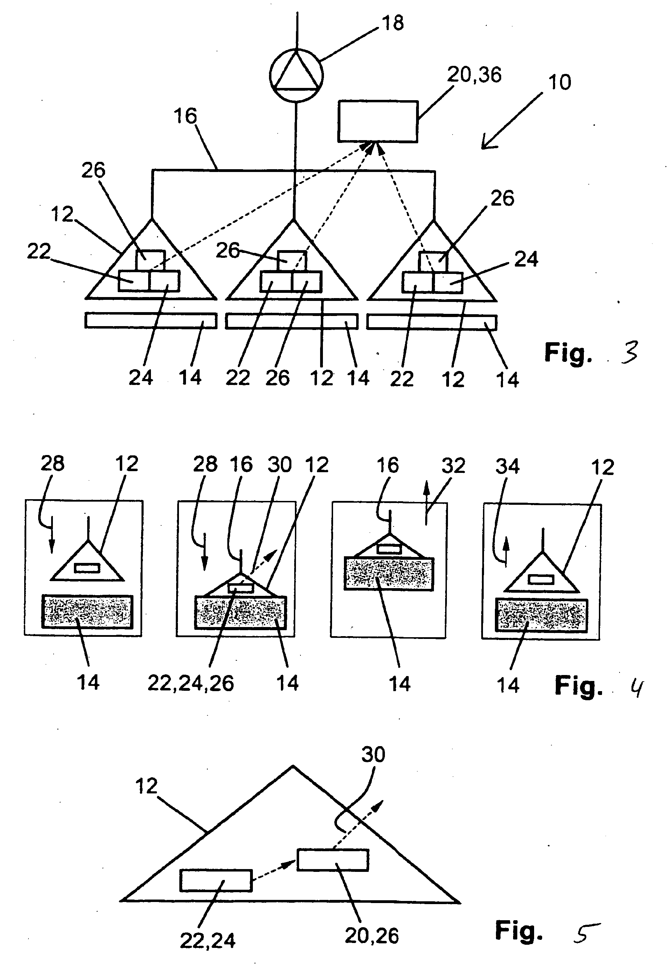

Die Figur 3 zeigt das Unterdruckgreifsystem 10 mit drei Sauggreifern 12 mit denen Werkstücke 14 angesaugt werden können. Die Sauggreifer 12 sind mittels einer Unterdruckleitung 16 mit einer Unterdruckversorgungseinrichtung 18, zum Beispiel einer Unterdruckpumpe oder einem Ejektor verbunden. Außerdem ist erkennbar, dass ein externer Datenspeicher 20 vorgesehen ist. Dabei stellt der Ejektor selbst eine Unterdruckkomponente dar.

In die einzelnen Sauggreifer 12 ist jeweils eine Energieerzeugungseinrichtung 22, ein sogenannter Energiewandler, und ein Sensor 24 integriert. Dieser Sensor 24 erfasst Zustände des Sauggreifers 12, zum Beispiel den im Sauggreifer 12 herrschenden Unterdruck oder die Anzahl der Lastzyklen, erzeugt Zustandsdaten und sendet diese über einen Sender 26 an den Datenspeicher 20. Die zum Betreiben des Sensors 24 und Betreiben des Senders 26 erforderliche elektrische Energie wird von der Energieerzeugungseinrichtung 22, welche zum Beispiel ein piezoelektrisches Element oder ein Induktionsgenerator, eine photovoltaische Zelle, eine Turbine, ein Schwingungswandler oder eine Thermopaar ist, erzeugt.

Die Figur 4 zeigt ein Ausführungsbeispiel eines Verfahrensablaufs beim Handhaben eines Werkstücks 14, bei dem der Sauggreifer 12 zunächst in Richtung des Pfeils 28 auf das Werkstück 14 abgesenkt wird, bis der Sauggreifer 12 auf dem Werkstück 14 aufsitzt. Dabei wird der Sauggreifer 12 verformt, wobei die mechanische Verformungsenergie von der Energieerzeugungseinrichtung 22 in elektrische Energie umgewandelt wird. Dadurch wird der Sender 26 aktiviert, und sendet ein Aktivierungssignal an den im Datenspeicher 20 sitzenden Empfänger, was mit dem Pfeil 30 angedeutet ist.

Sodann wird die Unterdruckversorgungseinrichtung 18 in Gang gesetzt und die Unterdruckleitung 16 mit Unterdruck versorgt. Das Werkstück 14 wird angesaugt. Nach Erreichen des erforderlichen Saugdrucks, was mit dem Sensor 24 ermittelt wird, wird ein weiteres Signal abgegeben was bedeutet, dass der Gegenstand 14 nunmehr angehoben (Pfeil 32) werden kann, da der im Sauggreifer 12 herrschende Unterdruck ausreichend groß ist. Sinkt der Unterdruck währenddessen im Sauggreifer 12 ab, wird dies vom Sensor 24 ebenfalls erkannt, sodass ein weiteres Signal abgesandt werden kann. Hat der Unterdruck seinen erforderlichen Wert erreicht, kann die Unterdruckversorgungseinrichtung 18 abgeschaltet oder die Unterdruckleitung 16 abgesperrt werden.

Nach dem Aufsetzen des Werkstücks 14, was wiederum vom Sensor 24 registriert wird, wird die Unterdruckleitung 16 belüftet, sodass der Sauggreifer 12 vom Gegenstand 14 in Richtung des Pfeils 34 abgehoben werden kann.

Das erfindungsgemäße Unterdrucksystem benötigt keine elektrischen Leitungen zur Energieversorgung des Sensors 24 und des Senders 26, und es Bedarf lediglich der Unterdruckversorgung des Sauggreifers 12.

In der Figur 5 ist ein Ausführungsbeispiel eines Sauggreifers 12 dargestellt, bei dem der Datenspeicher 20 in den Sauggreifer 12, zum Beispiel in Form eines RFID-Tags integriert ist. Dieser Sauggreifer 12 sendet ebenfalls Daten (Pfeil 30) an einen externen Empfänger 36, jedoch wird in der internen Speichereinheit 20 die Nutzungshistorie abgespeichert, die auch später ausgelesen werden kann. Neben der Nutzungshistorie können auch Identifikationsnummern, Herstellungsdatum, Hersteller, Materialkennungen usw. abgespeichert sein. Auf diese Weise können Rückschlüsse auf Falschbedienungen, fehlerhafte Herstellung usw. geschlossen werden.

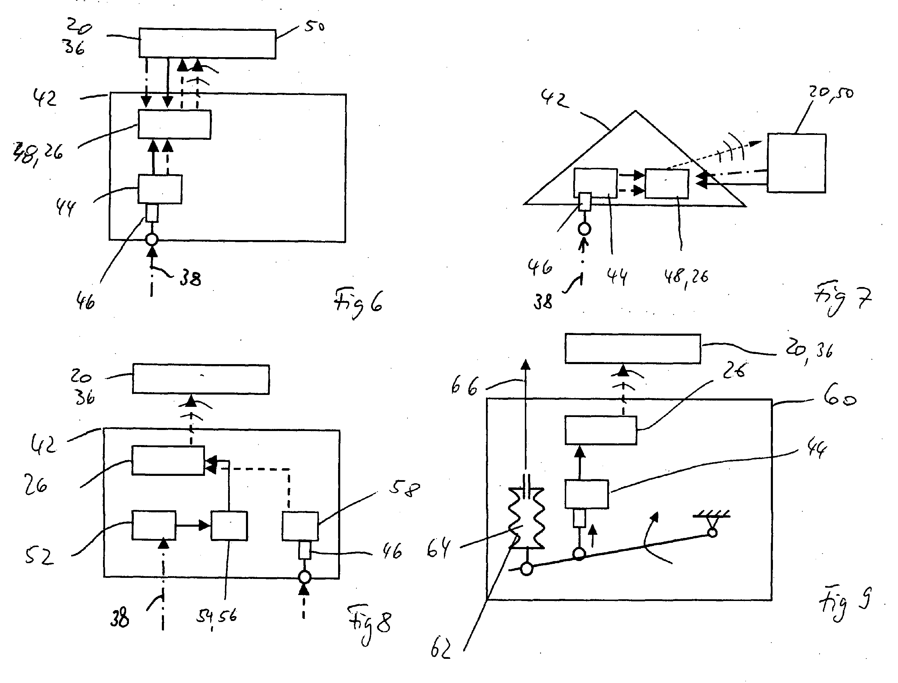

Die Figuren 6 und 7 zeigen eine Prinzipskizze eines Saugers 42 mit batterielosem Funkmodul und einer internen Speichereinheit. Im Sauger befinden sich ein Induktionsgenerator oder Piezoelement 44, das z.B. über einen Stößel 46 oder über einen elastischen Abschnitt des Saugers 42 betätigt wird und das einen Datenspeicher 48 und Funksender 26 mit elektrischer Energie versorgt. An Stelle des externen Datenspeichers 20 kann auch eine externe Anzeige 50 oder ein Signalkonverter z.B. für eine speicherprogrammierbare Steuerung (SPS), Robotersteuerung oder eine andere übergeordnete Steuerung vorgesehen sein.

Die Figur 8 zeigt eine Prinzipskizze eines Saugers 42 mit Funkmodul und einem Energie-Zwischenspeicher. Im Sauger 42 ist eine photovoltaische Zelle 52 untergebracht, mit welcher elektrische Energie erzeugt wird. Diese Energie wird in einem als Kondensator 54 ausgebildeten Energie-Zwischenspeicher 56 zwischengespeichert. Der Stößel 46 betätigt einen elektromechanischen Schalter 58.

Die Figur 9 zeigt eine Prinzipskizze eines mechanischen Vakuumschalters 60 mit Funkmodul. Im Vakuumschalter 60 sind ein Induktionsgenerator oder Piezoelement 44 angeordnet und als Betätigungselement ist ein Balg 62 oder Kolben vorgesehen, an welchen durch Absaugen von Luft in Richtung des Pfeils 66 ein Unterdruck 64 angelegt werden kann. Diese Ausführungsform wird in der Prozesssteuerung und der Automatisierung angewendet.

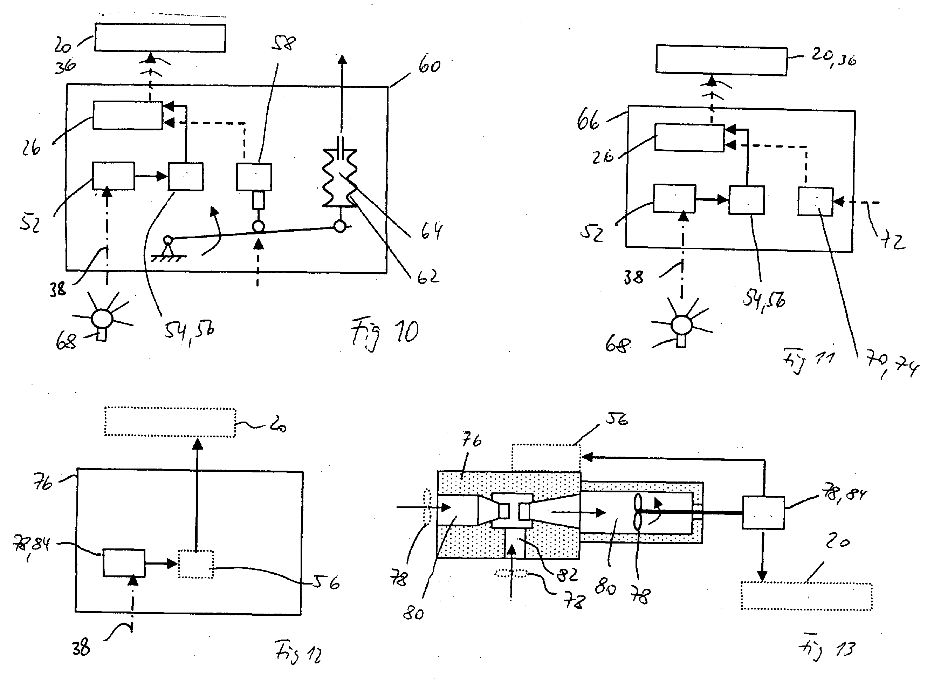

Die Figur 10 zeigt eine Prinzipskizze eines mechanischen Vakuumschalters 60 mit Funkmodul und Zwischenspeicher 56, der von einem Kondensator 54 gebildet wird. Im Vakuumschalter 60 ist eine photovoltaische Zelle 52 untergebracht, mit welcher aus Licht 68 elektrische Energie erzeugt wird. Diese Energie wird in einem als Kondensator 54 ausgebildeten Energie-Zwischenspeicher 56 zwischengespeichert.

Die Figur 11 zeigt eine Prinzipskizze eines elektrischen Vakuumschalters 66 mit Funkmodul 26 und Zwischenspeicher 56. Der Sendeimpuls wird vom Vakuumschalter 66 bei über- oder unterscheiten bestimmter Schaltschwellen 70 erzeugt, wobei der Vakuumschalter 66 mittels eines Schlauches 72 an den zu überwachenden Unterdruck angeschlossen ist. Bei einer Variante wird der Sendeimpuls mittels eines Timers 74 gesteuert. Der Sensor misst z.B. alle 2s den Vakuumwert und sendet ein analoges Signal an eine übergeordnete Steuerung.

Die Figuren 12 und 13 zeigen einen Ejektor 76, in dessen Luftstrom eine Turbine 78 angeordnet ist. Der Luftstrom ist entweder ein Blasluftstrom 80 oder ein Saugluftstrom 82. Die Turbine 78 treibt zur Gewinnung elektrischer Energie einen Generator 84 an. Die am Ausgang des Blasluftstroms 80 sitzende Turbine 78 wirkt zudem als Schalldämpfer, da sie den Luftstrom verlangsamt.

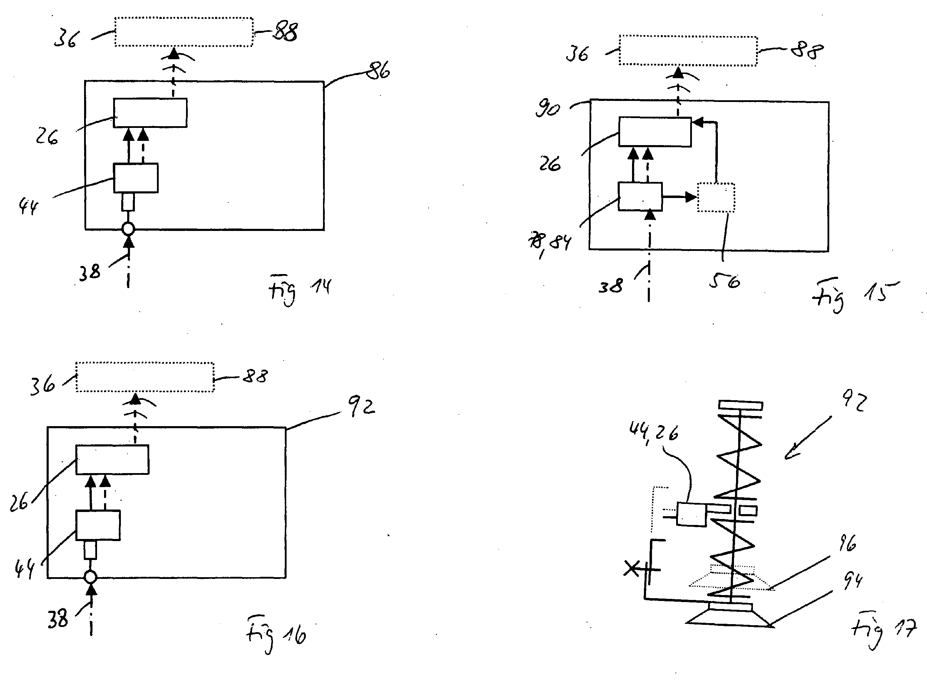

Die Figur 14 zeigt ein Tastventil 86 mit Induktionsgenerator 44 und Funksender 26. Die gesendeten und empfangenen Daten werden in einem Signalkonverter 88 für eine Robotersteuerung verarbeitet. Beim Aufsetzen des Tastventils 86 auf den Gegenstand taucht ein Stößel ein und es wird der Induktionsgenerator 44 betätigt, so dass der Funksender 26 mit elektrischer Energie zum Senden versorgt wird.

Die Figur 15 zeigt eine Ventilinsel 90, bei der ein Saug- oder Blasluftstrom zum Antrieb der Turbine 78 genutzt wird.

Die Figuren 16 und 17 zeigen eine Prinzipskizze eines Federstößels 92 mit einer einstellbaren Eintauchtiefenüberwachung. In Figur 17 ist mit durchgezogener Linie die ausgefahrene Stellung 94 und mit punktierter Linie die eingetauchte Stellung 96 des Federstößels 92 dargestellt.

## Patentansprüche

1. Unterdrucksystem, insbesondere Unterdruckgreifsystem (10), mit wenigstens einer Unterdruckgreifvorrichtung zum Greifen von Werkstücken (14) und/oder einer Unterdruckkomponente, wobei die Unterdruckgreifvorrichtung und/oder wenigstens eine der Komponenten eine Energieerzeugungseinrichtung (22) zum Erzeugen neuer, nicht im Unterdrucksystem originär gespeicherter, elektrischer Energie zum Betreiben eines elektrische Energie verbrauchenden Bauteils aufweist, wobei das elektrische Energie verbrauchende Bauteil ein Vakuumerzeuger, ein Sensor (24), ein Sender (26), eine Anzeige, ein Ventil, ein anderer Aktor oder ein Datenspeicher ist, **dadurch gekennzeichnet, dass** der Sensor (24) ein Unterdrucksensor, ein Strömungssensör, ein Luftmengensensor, ein Zähler, ein Bewegungssensor, ein Temperatursensor, ein Abstandssensor, ein Anwesenheitssensor oder ein Kraftsensor ist, dass der Sender (26) ein Funksender, ein Infrarotsender oder ein Ultraschallsender ist und dass der Sender (26) Daten des Sensors und/oder des Datenspeichers an einen externen Empfänger übermittelt.

2. Unterdrucksystem nach Anspruch 1, **dadurch gekennzeichnet, dass** die Unterdruckgreifvorrichtung ein Sauggreifer (12), ein Unterdruckspannsystem oder eine andere, ein Werkstück (14) mittels Unterdruck direkt oder indirekt festhaltende Vorrichtung ist.

3. Unterdrucksystem nach einem der vorhergehenden Ansprüche, **dadurch gekennzeichnet, dass** die Komponente ein Ejektor, ein Ventil, ein Datenspeicher, ein Sauggreifer, ein Federstößel, ein Vakuumschalter, eine Vakuumpumpe, ein Vakuumgebläse oder eine Anzeige ist.

4. Unterdrucksystem nach Anspruch 3, **dadurch gekennzeichnet, dass** das Ventil ein Elektromagnetventil, ein pneumatisches Ventil oder ein Tastventil ist.

5. Unterdrucksystem nach einem der vorhergehenden Ansprüche, **dadurch gekennzeichnet, dass** die Energieerzeugungseinrichtung (22) ein piezoelektrisches Element, ein Thermopaar, ein Schwingungswandler, ein Induktionsgenerator, eine Turbine mit einem Generator oder eine photovoltaische Zelle ist.

6. Unterdrucksystem nach Anspruch 5, **dadurch gekennzeichnet, dass** die Turbine in einem Luftstrom angeordnet ist.

7. Unterdrucksystem:nach Anspruch 6, **dadurch gekennzeichnet, dass** der Luftstrom ein Blasluftrom oder ein Saugluftstrom ist.

8. Unterdrucksystem nach einem der vorhergehenden Ansprüche, **dadurch gekennzeichnet, dass** die Energieerzeugungseinrichtung (22) in oder an einem Abschnitt angeordnet ist, der mechanisch bewegt wird.

9. Unterdrucksystem nach Anspruch 8, **dadurch gekennzeichnet, dass** der Abschnitt beim Anlegen an das Werkstück (14) oder beim Ergreifen des Werkstücks (14) verformt oder bewegt wird.

10. Unterdrucksystem nach Anspruch 8 oder 9, **dadurch gekennzeichnet, dass** der Abschnitt ein elastischer Bereich, z.B. eine Saugerwandung oder ein Tastventil ist, welches beim Aufsetzen auf das Werkstück (14) verlagert wird.

11. Unterdrucksystem nach einem der vorhergehenden Ansprüche, **dadurch gekennzeichnet, dass** eine Einrichtung zum Übermitteln der Zustandsdaten an einen Empfänger (36) vorgesehen ist.

12. Unterdrucksystem nach einem der vorhergehenden Ansprüche, **dadurch gekennzeichnet, dass** die Energieerzeugungseinrichtung (22) mit einem Energiespeicher verbunden ist.

13. Unterdrucksystem nach Anspruch 12, **dadurch gekennzeichnet, dass** der Energiespeicher eine Batterie, ein Akkumulator, ein Kondensator oder eine Brennstoffzelle ist.

14. Unterdrucksystem nach einem der vorhergehenden Ansprüche, **dadurch gekennzeichnet, dass** ein Element zum Erfassen von Zustände im Unterdrucksystem, insbesondere im Unterdruckgreifsystem (10) und/oder in einem der Komponenten, und zum Erzeugen von Zustandsdaten, vorgesehen ist.

## Claims

1. A vacuum system, in particular a vacuum gripping system (10), comprising at least a vacuum gripping device for gripping a workpiece (14) and/or a vacuum component, wherein the vacuum gripping device and/or one of the components having an energy generation device (2) configured to produce new electrical energy that is not originally stored in the vacuum gripping system to operate an electrical energy-consuming component, wherein the electrical energy-consuming component is a vacuum generator, a sensor (24), a transmitter (26), a display, a valve, another actuator or a data storage unit, **characterized in that** the sensor (24) being a vacuum sensor, a flow sensor, an air quantity sensor, a counter, a movement sensor, a temperature sensor, a distance sensor, a presence sensor or a force sensor, that the transmitter (26) being a radio transmitter, an infrared transmitter or an ultrasound transmitter, and that the transmitter (26) transmits data of the sensor and/or the data storage unit to an external receiver.

2. The vacuum system according to claim 1, **characterized in that** the vacuum gripping device is a suction gripper (12), a vacuum clamping system or a differtent holding device capable of directly or indirectly holding a workpiece (14).

3. The vacuum system according to one of the preceding claims, **characterized in that** the component being an ejector, a valve, a data storage unit, a suction gripper, a spring-loaded plunger, a vacuum switch, a vacuum pump, a vacuum blower or a display.

4. The vacuum system according to claim 3, **characterized in that** the valve being an electromagnetic valve, a pneumatic valve or a touch valve.

5. The vacuum system according to one of the preceding claims, **characterized in that** the energy generation device (22) is a piezoelectric element, a thermocouple, an oscillation converter, an induction generator, a turbine having a generator, or a photovoltaic cell.

6. The vacuum system according to claim 5, **characterized in that** the turbine being located in an air stream.

7. The vacuum system according to claim 6, **characterized in that** the air stream is an air blast stream and a suction stream.

8. The vacuum system according to one of the preceding claims, **characterized in that** the energy generation device (22) is located in or on a section, wherein the section is configured to be mechanically moved.

9. The vacuum system according to claim 8, **characterized in that** the section is configured to be transformed in shape or moved when attached to a workpiece (14) or when gripping a workpiece (14).

10. The vacuum gripping system according to claim 8 or 9, **characterized in that** the section is an elastic portion, e.g. a wall of a suction gripper or a touch valve, that is configured to be displaced when attached to a workpiece (14).

11. The vacuum system according to one of the preceding claims, **characterized in that** a transmission device configured to transmit status data to a receiver (36) is present.

12. The vacuum system according one of the preceding claims, **characterized in that** the energy generation device (22) is connected to an energy storage unit.

13. The vacuum system according to claim 12, wherein the energy storage unit is a battery, an accumulator, a condenser or a fuel cell.

14. The vacuum system according to one of the preceding claims, **characterized in that** a recording element is present configured to record statuses in the vacuum system, in particular in the vacuum gripping system (10) and/or in one of the components, and to generate status data.

## Revendications

1. Système à dépression, en particulier système de préhension par le vide (10), comprenant au moins un dispositif de préhension par le vide pour saisir des pièces à travailler (14) et/ou un composant à dépression, dans lequel le dispositif de préhension par le vide et/ou au moins l'un des composants présente un dispositif de génération d'énergie (22) pour générer de l'énergie électrique nouvelle, non accumulée d'origine dans le système à dépression, pour exploiter un élément constitutif consommant de l'énergie électrique, dans lequel l'élément constitutif consommant de l'énergie électrique est un générateur de vide, un capteur (24), un émetteur (26), un affichage, une vanne, un autre actionneur ou une mémoire de données, **caractérisé en ce que** le capteur (24) est un capteur de dépression, un capteur d'écoulement, un capteur de débit d'air, un compteur, un capteur de mouvement, un capteur de température, un capteur de distance, un capteur de présence ou un capteur de force, **en ce que** l'émetteur (26) est un émetteur radio, un émetteur infrarouge ou un émetteur d'ultrasons, et **en ce que** l'émetteur (26) transmet des données du capteur et/ou de la mémoire de données à un récepteur externe.

2. Système à dépression selon la revendication 1, **caractérisé en ce que** le dispositif de préhension par le vide est une pince aspirante (12), un système de serrage par le vide ou un autre dispositif retenant directement ou indirectement une pièce à travailler (14) par le vide.

3. Système à dépression selon l'une quelconque des revendications précédentes, **caractérisé en ce que** le composant est un éjecteur, une vanne, une mémoire de données, une pince aspirante, un poussoir à ressort, un interrupteur à vide, une pompe à vide, une soufflante à vide ou un affichage.

4. Système à dépression selon la revendication 3, **caractérisé en ce que** la vanne est une électrovanne, une vanne pneumatique ou un palpeur.

5. Système à dépression selon l'une quelconque des revendications précédentes, **caractérisé en ce que** le dispositif de génération d'énergie (22) est un élément piézoélectrique, un thermocouple, un transducteur de vibrations, un générateur d'induction, une turbine avec un générateur ou une cellule photovoltaïque.

6. Système à dépression selon la revendication 5, **caractérisé en ce que** la turbine est disposée dans un courant d'air.

7. Système à dépression selon la revendication 6, **caractérisé en ce que** le courant d'air est un courant d'air soufflé ou un courant d'air aspiré.

8. Système à dépression selon l'une quelconque des revendications précédentes, **caractérisé en ce que** le dispositif de génération d'énergie (22) est disposé dans ou sur une partie qui est déplacée mécaniquement.

9. Système à dépression selon la revendication 8, **caractérisé en ce que** la partie est déformée ou déplacée lorsque la pièce à travailler (14) est appliquée ou lorsque la pièce à travailler (14) est saisie.

10. Système à dépression selon la revendication 8 ou 9, **caractérisé en ce que** la partie est une zone élastique, par exemple une paroi d'aspirateur ou un palpeur, qui est décalée lorsque la pièce à travailler (14) est mise en place.

11. Système à dépression selon l'une quelconque des revendications précédentes, **caractérisé en ce qu'**un dispositif pour transmettre les données d'état à un récepteur (36) est prévu.

12. Système à dépression selon l'une quelconque des revendications précédentes, **caractérisé en ce que** le dispositif de génération d'énergie (22) est relié à un accumulateur d'énergie.

13. Système à dépression selon la revendication 12, **caractérisé en ce que** le réservoir d'énergie est une batterie, un accumulateur, un condensateur ou une pile à combustible.

14. Système à dépression selon l'une quelconque des revendications précédentes, **caractérisé en ce qu'**un élément pour détecter des états dans le système à dépression, en particulier dans le système de préhension par le vide (10) et/ou dans l'un des composants est prévu pour générer des données d'état.
